Europäisches Patentamt

European Patent Office

Office européen des brevets

(19)

(11) **EP 0 594 505 B1**

(12) **FASCICULE DE BREVET EUROPEEN**

(45) Date de publication et mention
de la délivrance du brevet:
**06.05.1998 Bulletin 1998/19**

(51) Int Cl.⁶: **H04N 7/24**, H04L 27/34

(21) Numéro de dépôt: **93402579.2**

(22) Date de dépôt: **20.10.1993**

(54) **Procédé de codage-décodage hiérarchique d'un signal numérique, et système correspondant utilisé en télévision numérique**

Verfahren zur hierarchischen Kodierung/Dekodierung eines digitalen Signals, und entsprechendes System zur Anwendung bei digitalem Fernsehen

Method for hierarchical coding/decoding of a digital signal and corresponding system used for digital television

(84) Etats contractants désignés:
**DE FR GB**

(30) Priorité: **22.10.1992 FR 9212663**

(43) Date de publication de la demande:
**27.04.1994 Bulletin 1994/17**

(73) Titulaires:
- **FRANCE TELECOM**
  **75015 Paris (FR)**
- **TELEDIFFUSION DE FRANCE**
  **75015 Paris (FR)**

(72) Inventeurs:
- **Combelles, Pierre**
  **F-35000 Rennes (FR)**
- **Castelain, Damien**
  **F-35000 Rennes (FR)**
- **Degoulet, Gabriel**
  **F-35000 Rennes (FR)**
- **Rivière, Marc**
  **F-35340 Liffre (FR)**

(74) Mandataire: **Fréchède, Michel et al**
**Cabinet Plasseraud**
**84, rue d'Amsterdam**
**F-75440 Paris Cédex 09 (FR)**

(56) Documents cités:

EP-A- 0 485 105      EP-A- 0 485 108
EP-A- 0 490 552      WO-A-92/22162
US-A- 4 495 619      US-A- 4 534 040
US-A- 5 237 292

- NTG FACHBERICHTE "BEWEGLICHE FUNKDIENSTE" no. 90 , 1985 , VDE-VERLAG FRANKFURT, DE pages 178 - 185 L. KITTEL ET AL. 'Verbundkodierung mit Abgestufem Fehlerschutz für Digitale Funktelephonsysteme'
- IEEE TRANSACTIONS ON INFORMATION THEORY vol. IT-23, no. 3 , 1977 , NEW YORK, US pages 371 - 377 H. IMAI ET AL. 'A New Multilevel Coding Method Using Error-Correcting Codes'
- IEEE TRANSACTIONS ON COMMUNICATIONS vol. 36, no. 4 , 1 Avril 1988 , NEW YORK US pages 389 - 400 J. HAGENAUER 'Rate-Compatible Punctured Convolutional Codes (RCPC Codes) and their Applications'
- NATIONAL TELECOMMUNICATIONS CONFERENCE vol. 1 , 30 Novembre 1980 , IEEE HOUSTON, TEXAS pages 1451 - 1457 D. DIVSALAR ET AL. 'Performance of Convolutionally Coded Unbalanced QPSK Systems'
- ELECTRONICS LETTERS vol. 20, no. 2 , 1 Janvier 1984 , LONDON, GB pages 62 - 63 E. L. CUSACK 'Error Control Codes for QAM Signalling'
- MICROPROCESSORS AND MICROSYSTEMS vol. 15, no. 1 , 1 Janvier 1991 , LONDON, GB pages 54 - 62 XP202718 D. D. MESSER 'Convolutional Encoding and Viterbi Decoding using the DSP56001'

**Description**

L'invention concerne un procédé de codage-décodage hiérarchique d'un signal numérique, et un système correspondant, susceptibles d'être utilisés en télévision numérique.

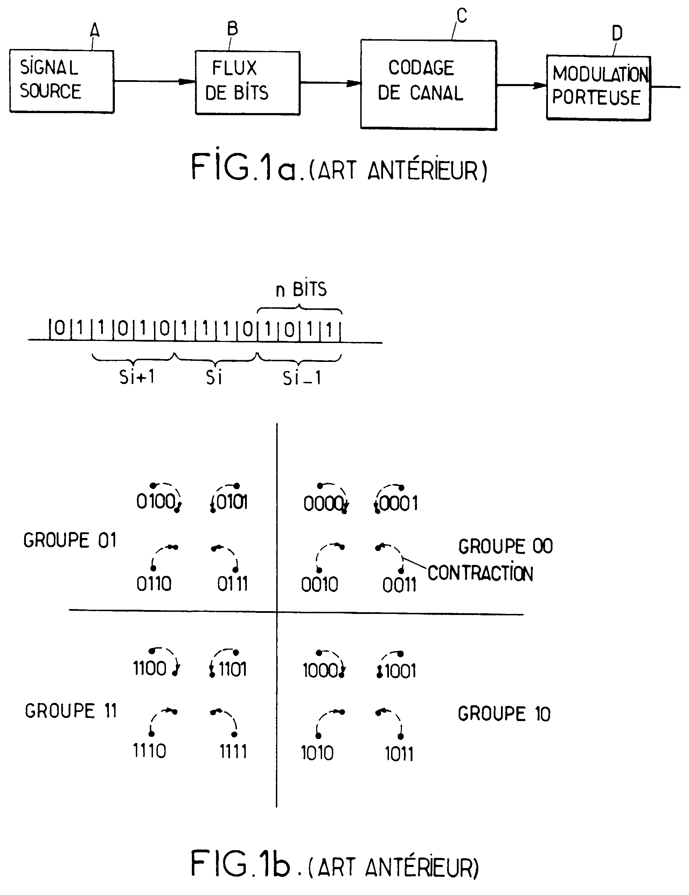

Les signaux utilisés en télévision numérique, pour la transmission de programmes sur un canal, sont engendrés, de manière classique, selon la séquence telle que représentée en figure 1a. Un signal numérique source, représentatif de l'information à transmettre est disponible sous forme d'un flux de bits. Ce flux de bits, après un processus de codage de canal approprié, est transformé en un signal de modulation, suite de symboles, permettant la modulation d'une onde porteuse de transmission.

A la réception, une suite de processus inverses permet de restituer successivement le flux ou suite de bits, puis le signal d'origine.

Un procédé de codage de canal est dit hiérarchique lorsqu'il permet, le flux de bits source étant subdivisé en au moins deux flux porteurs d'autant de types d'information, d'importance différente, de transmettre le ou les flux porteurs d'information essentielle avec une fiabilité supérieure aux flux porteurs d'informations secondaires. Les informations secondaires, ou information supplémentaire, peuvent constituer un complément des informations principales, ainsi qu'il sera supposé ci-après, sans qu'une telle supposition ne présente un caractère limitatif.

Un procédé de codage hiérarchique de canal connu, désigné par "Codage de source et de canal multirésolution pour signal numérique de télévision haute définition" consiste à effectuer un codage des symboles, dans lequel, ainsi que représenté en figure 1b, pour une constellation de $2^n$ symboles possibles, cette constellation est arrangée en $2^{n-P}$ groupes de symboles, chaque groupe contenant $2^P$ symboles de n bits. Ainsi qu'on l'a représenté en figure 1b, à chaque groupe de symboles est associée une première valeur numérique, représentative de l'information principale et à chaque symbole $S_i$ d'un groupe est associée une deuxième valeur numérique. La première valeur numérique est représentative d'un premier type d'information, ou information principale, et la deuxième valeur numérique est représentative d'un deuxième type d'information, ou information supplémentaire. L'information constituée par l'information principale et par l'information supplémentaire peut alors être transmise suite à modulation d'une onde porteuse.

Pour une description plus détaillée de ce type de codage de canal, on pourra utilement se reporter à la publication intitulée Multiresolution Source and Channel Coding for Digital Broadcast of HDTV publiée par K.M. Uz, K. Ramchandran et M. Vetterli, Department of Electrical Engineering and Center for Telecommunications Research, Columbia University, New York, NY 10027-6699.

A la réception après transmission, les bits indispensables de chaque symbole transmis, représentatifs de l'inforamtion principale, sont récupérés par détermination du groupe d'appartenance de ce symbole, formé de n bits successifs, les groupes étant représentés tels qu'en figure 1b par exemple de manière non limitative et le récepteur pour décoder les bits indispensables assimile la constellation aux $2^{n-p}$ groupes, d'adresse ou de code correspondant.

Une telle méthode n'apparaît cependant pas totalement efficace car la robustesse des bits indispensables, obtenue en contractant les $2^{n-p}$ groupes pour les écarter les uns des autres, se paye par une fragilité accrue des bits supplémentaires, puisque la distance intersymbole au sein d'un même groupe s'en trouve diminuée.

Le document EP-A-0 485 105 publié le 30 septembre 1992 décrit un procédé de codage hiérarchique d'un signal numérique dans lequel un processus de codage convolutif est introduit en vue d'améliorer la robustesse des bits indispensables transmis. Toutefois, dans le processus décrit, le gain en robustesse du codage est obtenu grâce à un processus de contraction des groupes de symboles, la distance minimale entre deux groupes de symboles étant supérieure à la distance minimale entre deux symboles d'un même groupe. Un tel mode opératoire a par contre également pour effet de fragiliser le processus de codage-décodage des bits supplémentaires, du fait même de cette contraction.

La présente invention a pour objet de remédier à l'inconvénient précité, par la mise en oeuvre d'un procédé de codage-décodage hiérarchique d'un signal numérique et d'un système correspondant, utilisés en télévision numérique, et dans lesquels les performances en taux d'erreur binaire sont notoirement améliorées.

Un autre objet de la présente invention est la mise en oeuvre d'un procédé de codage-décodage hiérarchique d'un signal numérique et d'un système correspondant, utilisés en télévision numérique, dans lesquels l'information principale peut être transmise puis reçue avec un pouvoir de discrimination intersymboles notoirement accru, sans toutefois sacrifier l'information supplémentaire.

Un autre objet de la présente invention est également la mise en oeuvre d'un procédé de codage-décodage hiérarchique d'un signal numérique, et d'un système correspondant, utilisés en télévision numérique permettant notamment le décodage séparé à la réception, après transmission de l'information principale et de l'information supplémentaire, ce qui permet la réception par des récepteurs, munis de décodeurs simplifiés, de la seule information principale, ou par des récepteurs plus complexes munis de décodeurs plus sophistiqués, de l'information complète.

Le procédé de codage hiérarchique d'un signal numérique à transmettre, succession de symboles support d'une information, objet de la présente invention, permet un codage sous forme d'une suite numérique codée d'un premier type d'information principale et un codage d'un deuxième type d'information supplémentaire sous forme d'une autre suite numérique codée, l'information principale et supplémentaire étant constitutives de l'information. Pour une constellation de $2^n$ symboles possibles, cette constellation est repérée par rapport à $2^{n-P}$ groupes de symboles contenant chacun $2^P$ symboles adjacents, à chaque groupe de symboles étant associée une première valeur numérique représentative de l'information principale et à chaque symbole d'un groupe étant associée une autre valeur numérique représentative de l'information supplémentaire. Il est remarquable en ce qu'il consiste à soumettre l'information principale à un codage spécifique de type codage long, de diversité D, pour obtenir une suite de bits indispensables codés et à déterminer, à partir de n-p bits subséquents de la suite de bits indispensables codés, chaque groupe courant de la constellation de façon à associer aux n-p bits le groupe courant correspondant. Parallèlement ou suite aux étapes précitées, le procédé selon l'invention consiste à déterminer à partir de p bits subséquents de l'autre suite numérique codée la position du symbole dans ce groupe courant.

Le procédé de décodage d'un signal numérique transmis, issu d'un codage hiérarchique selon le procédé précité, consiste à soumettre le signal numérique transmis à un processus de démodulation pour obtenir les symboles reçus après transmission du signal numérique. Une pluralité de ces symboles est alors soumise à un décodage par décisions douces pour restituer les bits indispensables représentatifs de ladite information principale et les groupes associés correspondants, pour reconstituer au moins l'information principale, l'information supplémentaire pouvant être ignorée.

Le procédé de codage-décodage objet de la présente invention et le système de codage décodage correspondant trouvent application à la transmission de tout type de signaux numériques, notamment de signaux de télévision numérique à haute définition.

Une description plus détaillée du procédé et du système de codage-décodage sera donnée en liaison avec les figures ci-après dans lesquelles, outre les figures 1a et 1b relatives à l'art antérieur,

- la figure 2a représente un diagramme synoptique illustratif du procédé de codage hiérarchique d'un signal numérique objet de l'invention,
- la figure 2b représente une première et une deuxième variantes de réalisation du procédé objet de l'invention,
- la figure 2c représente un détail de réalisation du procédé de codage objet de l'invention,
- la figure 3a représente un diagramme synoptique illustratif du procédé de décodage d'un signal numérique, codé conformément au procédé de codage hiérarchique objet de l'invention,
- la figure 3b représente un détail de réalisation du procédé de décodage décrit en figure 3a,
- la figure 3c représente une variante de réalisation du processus de décodage objet de la présente invention, appliqué aux bits supplémentaires support de l'information supplémentaire, dans le cas où ces derniers ont eux-mêmes subi un codage spécifique avant l'émission,

- la figure 3d donne une représentation d'une constellation comportant soixante quatre symboles possibles, chaque symboles représentant six bits subséquents,
- la figure 3e représente une première variante de mise en oeuvre du procédé de codage-décodage hiérarchique objet de la présente invention,
- la figure 3f représente une deuxième variante de mise en oeuvre du procédé de codage-décodage hiérarchique objet de la présente invention dans lequel une homothétie en dilatation ou contraction des groupes est introduite,
- la figure 4a représente un mode de réalisation général non limitatif d'un dispositif de codage hiérarchique d'un signal numérique, conforme à l'objet de la présente invention,
- la figure 4b représente différents détails de réalisation du dispositif de codage représenté en figure 4a,
- la figure 5a représente un mode de réalisation général d'un dispositif de décodage d'un signal numérique codé au moyen d'un dispositif de décodage d'un signal numérique codé au moyen d'un dispositif de codage tel que représenté en figure 4a ou 4b,
- la figure 5b représente une variante de réalisation du dispositif de décodage représenté en figure 5a, variante de réalisation plus sophistiquée dans laquelle l'information supplémentaire décodée est utilisée,
- la figure 5c représente différents détails de réalisation du dispositif de décodage représente en figure 5b.

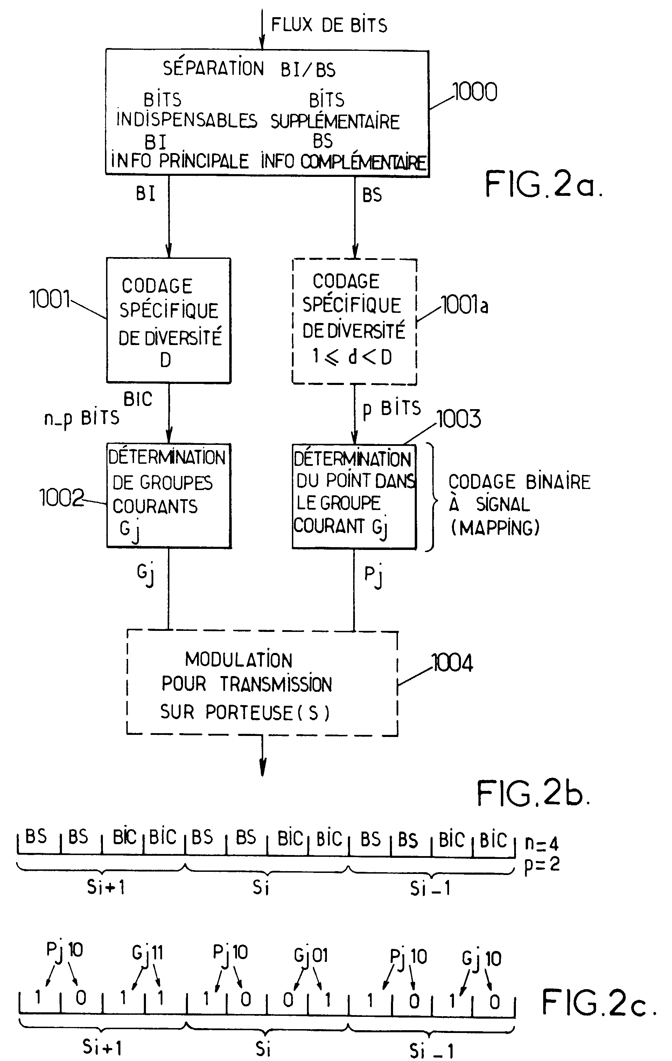

Une description plus détaillée du procédé de codage hiérarchique d'un signal numérique objet de la présente invention sera maintenant donnée à l'aide des figures 2a et suivantes.

D'une manière générale, le procédé de codage objet de la présente invention permet d'effectuer un codage d'un signal numérique à transmettre, constitué par exemple par un flux de bits. Le flux de bits correspond par exemple au flux de bits obtenus ainsi que représenté en figure 1a dans le cadre de l'art antérieur après l'étape B. Ce codage est ainsi effectué sous forme d'une suite numérique codée d'un premier type d'information principale et d'un deuxième type d'information supplémentaire, sous forme d'une autre suite numérique codée. L'information principale et l'information supplémentaire sont constitutives de l'information.

Selon un premier aspect du procédé de codage hiérarchique d'un signal numérique objet de l'invention, pour une constellation de $2^n$ symboles possibles, cette constellation est arrangée en $2^{n-p}$ groupes de symboles possibles contenant chacun $2^P$ symboles adjacents, ainsi que déjà mentionné relativement à l'art antérieur en liaison avec la figure 1b.

Le choix de la configuration des groupes peut, selon un aspect particulièrement avantageux du procédé objet de l'invention, être effectué de façon que le nombre de symboles situés à la frontière entre deux groupes soit le plus petit possible.

Selon une première étape référencée 1000 en figure 2a, à chaque groupe de symboles possibles est associée une première valeur numérique représentative de l'information principale, et à chaque symbole possible d'un groupe est associée une autre valeur numérique représentative de l'information supplémentaire.

Ainsi, à chaque symbole transmis sont associés n-p bits indispensables BI support de l'information principale et p bits supplémentaires BS support de l'information supplémentaire.

A titre d'exemple non limitatif, et en fonction de la structure du signal, les bits indispensables BI et les bits supplémentaires BS sont bien entendu des bits particuliers spécifiques représentatifs de l'information principale respectivement de l'information supplémentaire. Dans le cadre d'un signal de télévision numérique haute définition par exemple, on indique à titre d'exemple non limitatif que les bits indispensables BI sont par exemple ceux relatifs soit à la synchronisation de trame et/ou à l'information relative au signal de luminance/chrominance aux fréquences basses, par exemple. En ce qui concerne les bits supplémentaires BS, ceux-ci peuvent être par exemple constitués par les bits support de l'information de luminance/chrominance aux fréquences hautes.

En fonction de la structure du signal numérique et du flux de bits reçus, laquelle est parfaitement connue, en fonction des étapes A et B représentées en figure 1a, l'étape 1000 précitée représentée en figure 2a, peut être réalisée à l'aide de dispositifs d'adressage en lecture, lesquels ne seront pas décrits, car connus de l'homme de l'art, dans la description.

A l'issue de l'étape 1000, chaque période délivre q bits indispensables BI (q < n-p) et p bits supplémentaires BS.

Selon un aspect particulièrement remarquable du procédé de codage hiérarchique objet de la présente invention, celui-ci consiste alors, ainsi que représenté en figure 2a, à soumettre l'information principale, en une étape notée 1001, à un codage spécifique pour obtenir une suite de bits indispensables codés, notés BIC sur la figure précitée. Chaque période délivre n-p BIC. On indique que le codage spécifique utilisé est un codage de type codage long de grande diversité D. On rappelle que pour un code de diversité D, deux séquences du code ont au moins D bits d'écart. On indique en outre que la seule contrainte au niveau du type de codage à utiliser est que ce type de codage à grande diversité autorise un décodage par décisions douces.

Le procédé objet de la présente invention consiste alors, ainsi que représenté à l'étape 1002 de la figure 2a, à déterminer à partir de n-p bits subséquents de la suite de bits indispensables codés BIC le groupe d'appartenance du symbole à transmettre. Comme il est donc très peu probable que D symboles successifs se trouvent tous à proximité de la limite entre deux groupes, tels que représentés en figure 1b, en l'absence de contraction, on comprend bien sûr que les D symboles ainsi obtenus suite au codage long peuvent être repérés dans ces conditions par rapport au groupe précédemment défini.

Ainsi que représenté sur la figure 2a, et parallèlement ou suite aux étapes 1001 et 1002 précitées, le procédé de codage hiérarchique selon l'invention consiste à déterminer, à partir de p bits subséquents de l'autre suite numérique codée, constituée par les bits supplémentaires BS, la position du symbole courant à transmettre, Si, dans le groupe courant, Gj, correspondant. On note la position précitée, Pj, l'étape de détermination précédemment mentionnée étant notée 1003 sur la figure 2a.

Ainsi, pour chaque symbole Si, il existe un groupe, Gj, et une position du symbole dans le groupe, Pj, chaque symbole Si étant ainsi repéré par rapport à l'ensemble des groupes tel que représentés en figure 1b.

Les adresses d'identification de groupe, Gj, et de position de chaque symbole dans le groupe ainsi défini, Pj, peuvent alors être utilisées dans une étape 1004 correspondant à une modulation pour transmission des informations correspondantes.

Par rapport au procédé de l'art antérieur, tel que représenté en figures 1a et 1b, on indique que, dans le procédé classique représenté dans les figures précitées, le codage de canal représenté à l'étape C de la figure 1a n'introduit pour l'obtention d'une protection inégale que la contraction de chacun des groupes.

Dans le procédé de codage hiérarchique objet de la présente invention, l'introduction du codage spécifique de grande diversité D permet, en outre, de réduire sensiblement la probabilité que D symboles successifs se retrouvent tous à proximité de la limite entre deux groupes, ce qui permet bien entendu une diminution correspondante du risque d'ambiguité lors du décodage des symboles transmis, ainsi qu'il sera décrit ultérieurement dans la description.

Sur la figure 2a, on en outre représenté en traits mixtes une étape complémentaire 1001a, laquelle peut consister en un codage spécifique de diversité d des bits supplémentaires BS. Bien entendu, une telle étape n'est pas indispensable, mais le type de codage choisi peut, soit consister en un codage de même type que le codage spécifique appliqué aux bits indispensables BI, auquel cas la diversité du codage spécifique des bits supplémentaires est identique à la diversité D du codage des bits indispensables, soit en un codage de type différent. Par convention, on indique que la diversité de codage d prise égale à 1 des bits supplémentaires indique l'absence de codage spécifique de diversité des bits précités.

Sur la figure 2b, on a représenté un mode de réalisation relatif à la détermination des bits subséquents de la suite de bits indispensables codés BIC. A titre d'exemple non limitatif, on indique que le nombre de bits assignés à chaque symbole courant $S_i$ est par exemple $n = 4$, le nombre $p$ de bits supplémentaires BS étant alors pris égal à $p = 2$.

Dans ces conditions, une séquence de symboles possibles, $S_i$, constituant une constellation de symboles peut être repérée par rapport à une grille de type MAQ 16, telle que représentée en figure 1b, dans laquelle peuvent être repérés 16 symboles en 4 groupes $C_j$, $j$ présentant les valeurs d'adresse d'identification de groupe 00, 01, 10, et 11, et chaque position dans chaque groupe, position $P_j$, pouvant prendre les valeurs correspondantes 00, 01, 10 et 11.

Ainsi qu'on l'a représenté sur la figure 2b, les $n-p$ bits subséquents indispensables codés BIC sont donc au nombre de 2 pour chaque symbole, $S_{i-1}$, $S_i$, $S_{i+1}$, les bits indispensables étant intercalés avec les bits supplémentaires, BS, lesquels pour chaque symbole sont en nombre égal à 2. La figure 2b représente les bits indispensables codés et les bits supplémentaires intercalés correspondants.

Le processus de détermination est alors représenté en figure 2c, chaque groupe, $G_j$, et la position dans le groupe, $P_j$, pour chaque symbole successif, $S_{i-1}$ à $S_{i+1}$ pouvant alors être effectués par lecture des bits correspondants, bits indispensables codés BIC, respectivement bits supplémentaires BS codés ou non.

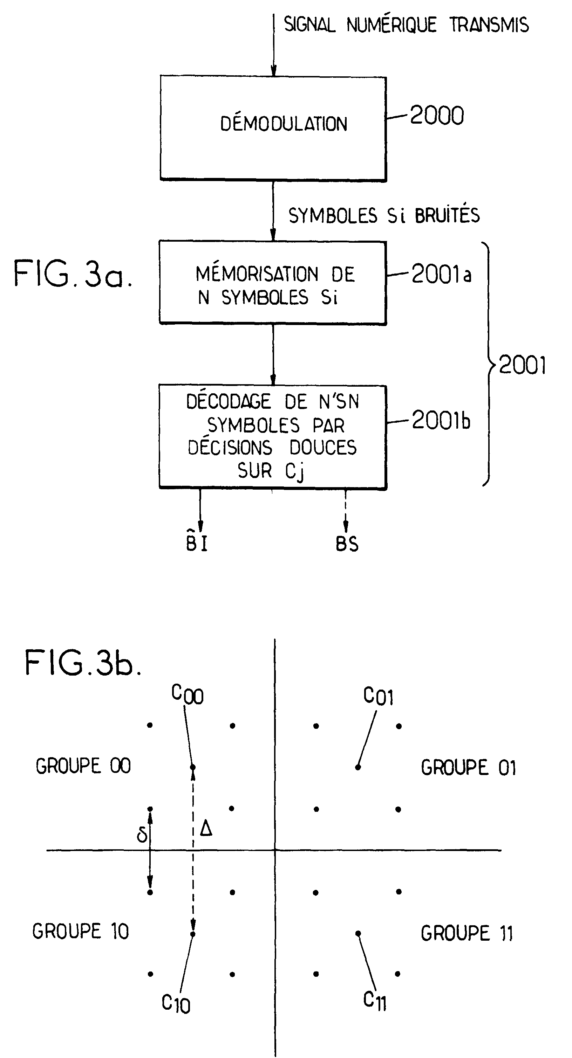

Une description plus détaillée d'un procédé de décodage d'un signal numérique transmis, issu d'un codage hiérarchique selon le procédé de codage précédemment décrit, sera maintenant donnée en liaison avec les figures 3a et suivantes.

Le signal numérique est transmis selon une transmission par modulation de porteuse(s) classique. Le signal numérique transmis et reçu est en premier lieu, ainsi que représenté en figure 3a, soumis à un processus de démodulation, noté 2000, pour obtenir les symboles reçus après transmission du signal numérique. Les symboles reçus, $S_i$, sont les symboles obtenus selon le processus de codage hiérarchique précédemment défini et décrit dans la description, affectés du bruit de transmission et des distorsions dues au canal. Les symboles $S_i$ sont ensuite soumis à un décodage par décisions douces pour restituer les bits indispensables représentatifs de l'information principale et les groupes associés correspondants. Cette étape est notée 2001 sur la figure précitée. L'étape de décodage précitée permet de reconstituer au moins l'information principale, l'information supplémentaire pouvant être ignorée.

Sur la figure 3a, on a représenté l'étape de décodage 2001 subdivisée en deux sous-étapes, l'étape 2001a et 2001b, l'étape 2001a consistant à mémoriser N symboles $S_i$ successifs, par exemple, de façon à effectuer le décodage proprement dit en une étape 2001b sur le symbole ou une pluralité $N' \leq N$ de symboles les plus anciens. Le décodage par décisions douces effectué effectivement en 2001b permet alors de faire profiter aux symboles critiques, c'est-à-dire ceux proches d'une frontière du groupe correspondant, de l'intervalle de confiance des symboles plus sûrs, c'est-à-dire éloignés de toute frontière intergroupes.

Un tel décodage permet ainsi l'obtention d'une robustesse très supérieure des bits indispensables estimés, 'BI, tant que le taux d'erreur visé reste de l'ordre de $10^{-4}$. Les bits indispensables estimés sont les bits indispensables obtenus après transmission et décodage.

Selon un aspect particulièrement avantageux du procédé de décodage objet de la présente invention, le décodage proprement dit effectué à l'étape 2001b peut être effectué grâce à un procédé de décodage de type processus de Viterbi, tel que décrit dans l'article intitulé "Convolutional Code and their Performances in Communication Systems" par Andrew J. Viterbi, IEEE Transactions, and Communication Technology Vol-Com-19 N°5 October 1971.

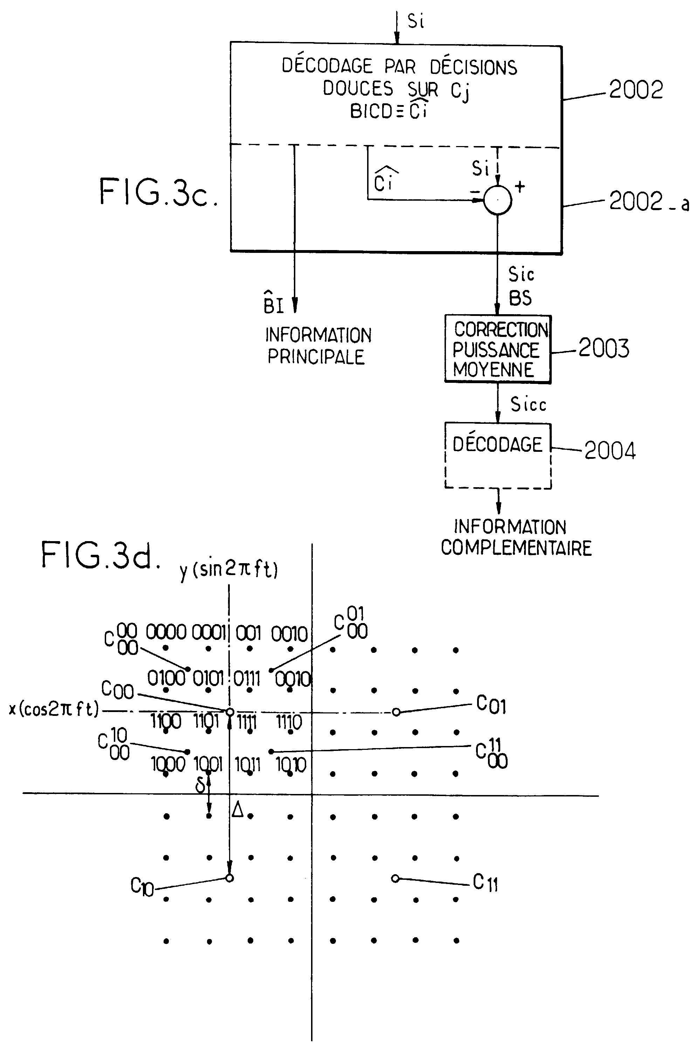

Ainsi qu'on l'a en outre représenté en figure 3c, et selon un aspect particulièrement avantageux du procédé de décodage objet de la présente invention, le décodage proprement dit, effectué à l'étape 2001b, peut s'effectuer en assimilant le symbole courant $S_i$ à la version bruitée d'un symbole $C_j$ défini comme la moyenne pondérée des symboles possibles du groupe $G_j$ sur lequel le symbole $S_i$ courant est repéré. Du point de vue du décodage, les bits indispensables à décoder sont donc associés à ces valeurs moyennes $C_j$, les symboles bruités reçus sont donc comparés à la grille de référence, de type MDP4, constituée par les valeurs $C_j$ précitées. Pour les groupes 00, 01, 10 et 11, les valeurs moyennes pondérées sont notées respectivement $C_{00}$, $C_{01}$, $C_{10}$, $C_{11}$, comme indiqué sur la figure 3c. Il est à noter que le décodage délivre alors quatre types d'information équivalentes :

- les bits indispensables décodés 'BI,
- leur version recodée BICD,
- la séquence des groupes $\widehat{G_j}$ correspondants aux bits recodés BICD, à savoir la séquence de groupes la plus probable, compte tenu du codage spécifique,
- la séquence des valeurs moyennes $\widehat{C_j}$ des symboles des groupes $\widehat{G_j}$.

On comprend, à titre d'exemple non limitatif, que la valeur moyenne pondérée peut être constituée par le barycentre des valeurs de symboles possibles constitutives du groupe correspondant.

En ce qui concerne l'information principale, le décodage à décisions douces permet, du point de vue des performances, de se rapprocher d'un système de transmission simplifié où seule l'information principale serait transmise suite au même codage spécifique de diversité D, et repérage sur la constellation réduite formée par les barycentres C00, C01, C10 et C11, lesquels présentent une distance $\Delta$ très supérieure à la distance $\delta$ intersymbole dans le plan de représentation de la figure 3c. On comprend ainsi que le pouvoir de discrimination équivalent pour les bits indispensables décodés correspondants est sensiblement augmenté.

On notera bien sûr qu'une variante de réalisation particulièrement intéressante peut consister, en fonction des applications, pour des symboles $S_i$ sélectionnés par 6 bits, en un mode de réalisation dans lequel, ainsi que représenté en figure 3d, les bits indispensables sont portés par les quadrants d'une grille de type MAQ64, après un codage convolutif puissant de diversité D = 10 et de rendement 1/2.

A chaque groupe correspondant, ainsi que représenté en figure 3d, est associé un point de la grille de type MDP4 formée par les valeurs moyennes pondérées C00 à C11 représentées sur la figure précitée.

Les bits supplémentaires BS sont alors portés dans chaque groupe, Gi, par un symbole repéré sur la grille MAQ16 que constitue ce groupe. Les bits supplémentaires peuvent alors être codés en fonction des exigences des conditions de réception sans incidence aucune sur les bits indispensables.

En l'absence de codage spécifique des bits indispensables, la dégradation en performance sur ces bits indispensables serait, dans ce contexte, de 12 dB par rapport à un système où seuls les bits indispensables seraient transmis, par l'intermédiaire d'une modulation MDP4 dont la grille serait constituée des seuls barycentres Cj. On indique que les valeurs précitées sont évaluées et retrouvées facilement en comparant les distances minimales ainsi que représenté en figure 3d.

Par l'utilisation du procédé de codage et de décodage décrit précédemment, le cas asymptotique du rapport signal à bruit reste le même, mais tombe à une valeur de 3,5 dB en canal gaussien, pour un taux d'erreur de $10^{-4}$.

Par le procédé de codage-décodage ainsi défini, conformément à l'objet de l'invention, les bits indispensables bénéficient de la même protection que s'ils étaient transmis seuls et avec le même codage sur une grille de type MDP4 dont la puissance ne serait inférieure à celle des valeurs moyennes pondérées ou barycentres que de 3,5 dB.

Il est à noter que le processus de codage-décodage précédemment décrit relativement aux bits indispensables ne détériore pas la transmission des bits supplémentaires associés aux symboles correspondants. En effet, en l'absence de contraction des symboles à l'intérieur des groupes, la distance minimale à l'intérieur d'un quadrant est de toute façon celle de la grille de type MAQ64 globale utilisée, notée $\delta$ en figure 3d.

Compte tenu de la remarque précédente, le procédé objet de la présente invention peut alors consister, afin d'utiliser l'information supplémentaire correspondant aux bits supplémentaires BS, suite aux étapes précédentes et ainsi que représenté en figure 3c, à effectuer, en une étape 2002a, sur le symbole reçu Si une soustraction de la valeur 'Ci correspondante, disponible à l'issue du décodage précédemment décrit en liaison avec les figures 3a à 3d. Cette opération permet de délivrer un symbole complémentaire correspondant aux bits supplémentaires codé ou non, ce symbole complémentaire correspondant étant noté Sic sur la figure 3c.

L'étape 2002a précédemment citée peut alors être suivie d'une étape 2003 consistant à effectuer sur le symbole complémentaire Sic correspondant aux bits supplémentaires BS, codés ou non, une étape de correction de la puissance moyenne du signal, notée 2003, pour délivrer un symbole complémentaire corrigé, Sicc. Ceci permet notamment, si nécessaire, de contracter chaque groupe à l'émission sans en informer le récepteur. On notera bien sûr que dans le cas où le procédé de codage comporte une étape de codage de l'information supplémentaire, codage spécifique de diversité d, notée 1001a sur la figure 2a, le procédé de décodage tel que représenté en figure 3c comporte ensuite une étape de décodage 2004 correspondante.

On notera ainsi que le procédé de codage objet de la présente invention est remarquable en ce qu'il permet, même en l'absence de contraction des groupes de points décrits précédemment, d'obtenir une protection inégale efficace. Les performances obtenues sont alors nettement meilleures que celles des procédés de codage hiérarchique rencontrés jusqu'à présent.

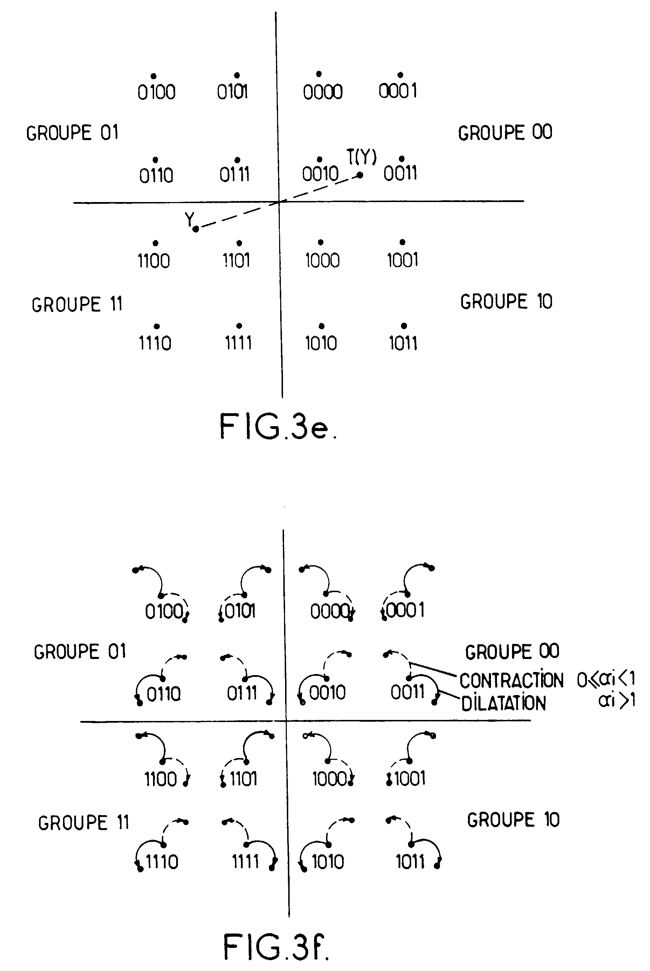

Une première variante avantageuse du procédé de décodage objet de la présente invention sera décrite en liaison avec la figure 3e.

On rappelle, en premier lieu, que le processus de codage consiste à subdiviser la constellation en $2^{n-p}$ groupes de symboles fixes comportant $2^P$ symboles chacun. Les n-p bits obtenus à partir de bits de haute priorité ayant subi un codage long de diversité D permettent de sélectionner un groupe de la constellation alors que les p bits supplémentaires codés ou non permettent de déterminer la position du symbole dans ce groupe.

Au décodage, les n-p bits codés du symbole transmis sont décodés par décisions douces comme si la constellation était réduite aux barycentres des groupes précités et l'on en déduit le groupe d'appartenance du symbole transmis. Les p bits supplémentaires peuvent alors être repérés après décodage ou non en réduisant la constellation au groupe précité.

La méthode précitée permet un décodage optimal, c'est-à-dire avec un taux d'ambiguïté minimum, ou à maximum de vraisemblance a posteriori.

Elle présente cependant l'inconvénient d'additionner les délais de décodage, le décodage des n-p bits relatifs à l'information principale devant être effectué avant de procéder au décodage des p bits supplémentaires.

La variante avantageuse précitée permet de s'affranchir de cet inconvénient, en introduisant cependant un décodage légèrement sous optimal des p bits supplémentaires.

Dans ce but, lors du codage, les métriques (c'est-à-dire les paramètres de décodage), des p bits supplémentaires doivent peu dépendre de la connaissance du groupe auquel le symbole à transmettre appartient, les n-p bits de l'information principale étant ignorés. Dans le cas d'une représentation par grille de type MAQ dont les quadrants constituent les groupes, et pour un repérage ou adressage des p bits supplémentaires symétrique par rapport aux axes de la grille, il est alors possible de ne conserver que les valeurs absolues des coordonnées du symbole transmis T(Y) sur la figure 3e. La constellation est alors restreinte à son quadrant supérieur droit pour le repérage, codage ou décodage, des p bits supplémentaires. Une méthode particulièrement simple d'obtenir la symétrie précitée est la suivante : les n-p bits codés adressent le signe des coordonnées ($\pm 1$ ; $\pm 1$) du symbole d'origine dans le repère MAQ64 et les p bits supplémentaires leur seule valeur absolue.

Une deuxième variante avantageuse du procédé de codage-décodage hiérarchique d'un signal numérique objet de la présente invention sera décrite ci-après en liaison avec la figure 3f. Selon les procédés de l'art antérieur, confer fig. 1b, une contraction des groupes repérés ou adressés par les bits relatifs à l'information principale est effectuée, ce qui permet d'augmenter la distance intersymboles correspondante. La mise en oeuvre conjointe d'un processus de contraction et d'un codage long de grande diversité suivi d'un décodage par décisions douces, conformément au procédé objet de l'invention, permet encore d'améliorer les performances du décodage des bits relatifs à l'information principale, au détriment toutefois de celles relatives aux bits relatifs à l'information supplémentaire.

Réciproquement selon un aspect particulièrement avantageux du procédé objet de l'invention, selon la deuxième variante envisagée, il est prévu de dilater les groupes précités, afin d'améliorer les performances du décodage des bits relatifs à l'information supplémentaire, au détriment de celles des bits relatifs à l'information principale. Le processus de contraction ou de dilatation des groupes s'entend bien sûr d'un processus dynamique, ce qui permet finalement de transformer par homothétie, soit en contraction, soit en dilatation, les groupes précités et finalement d'ajuster, grâce à cette transformation, le compromis robustesse du codage-décodage des bits relatifs à l'information principale/fragilité du codage-décodage ou repérage des bits relatifs à l'information supplémentaire.

En particulier, dans le cas où les symboles à transmettre sont par exemple organisés en trames, contenant plusieurs symboles, il est ainsi avantageux d'appliquer ou associer aux groupes, dans le repère utilisé, un coefficient d'homothétie, $\alpha i$, dilatation ou contraction, en fonction de la position du symbole à transmettre dans la trame. Ainsi, plusieurs valeurs discrètes de coefficients d'homothétie, $\alpha i$, peuvent être prévues, avec $i \in [1,Q]$ où Q désigne un entier positif. Pour $\alpha i = 1$, la constellation, en l'absence de dilatation ou de contraction, est régulière, pour $0 \le \alpha i < 1$, les groupes sont rétrécis, et pour $1 < \alpha i$, les groupes sont dilatés.

Les valeurs $\alpha i$ précitées, une valeur $\alpha i$ étant associée à chaque symbole au codage selon une loi déterminée, peuvent alors, soit être transmises, soit être retrouvées à partir de cette loi pour effectuer le décodage.

Pour un nombre Q de coefficients $\alpha i$ on engendre ainsi Q sous-flux de bits relatifs à l'information principale et à l'information supplémentaire, chaque flux correspondant à une valeur $\alpha i$. La robustesse du codage-décodage des flux de bits relatifs à l'information principale décroît avec la valeur du coefficient d'homothétie, $\alpha i$, celle des flux de bits relatifs à l'information supplémentaire croît avec la valeur du coefficient d'homothétie, $\alpha i$. Le processus de modulation précité permet ainsi d'engendrer un phénomène de "dégradation douce" de la variation du taux d'ambiguité du codage-décodage des bits relatifs à l'information principale et supplémentaire, en lieu et place de la variation abrupte obtenue lorsque tous les $\alpha i$ sont égaux à 1, par exemple. Une diminution progressive des conditions de réception se traduit alors par une perte d'information progressive flux par flux sur les bits relatifs à l'information supplémentaire puis sur ceux relatifs à l'information principale. Dans la suite de la description, on considère pour des raisons de simplification du seul exposé que le coefficient d'homothétie est pris égal à 1, la constellation étant alors régulière pour tous les symboles émis.

Enfin, il est également possible, dans chaque groupe Gj, d'associer une partie des bits supplémentaires BS à un sous-groupe Gij, de valeur moyenne pondérée intermédiaire Cij, notée $C_{00}^{00}$ , $C_{00}^{01}$ , $C_{00}^{10}$ , $C_{00}^{11}$ , ainsi que représenté en figure 3d, sans sortir du cadre du procédé selon l'invention. L'itération successive de subdivision en sous-groupes, lorsqu'elle est utilisée au codage et au décodage, permet d'obtenir une protection à plus de deux niveaux.

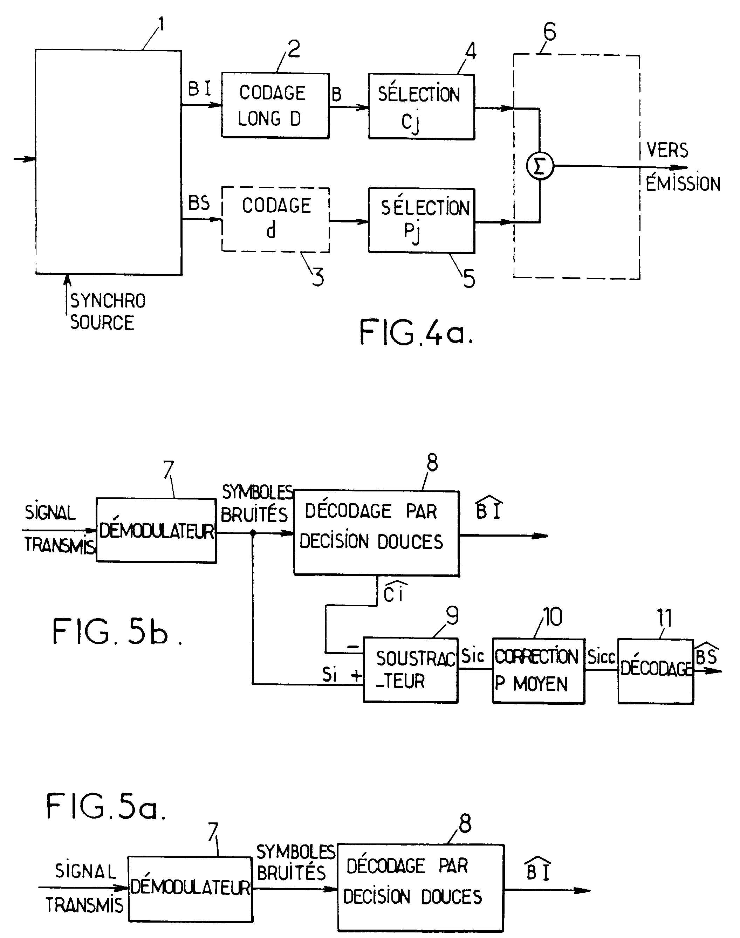

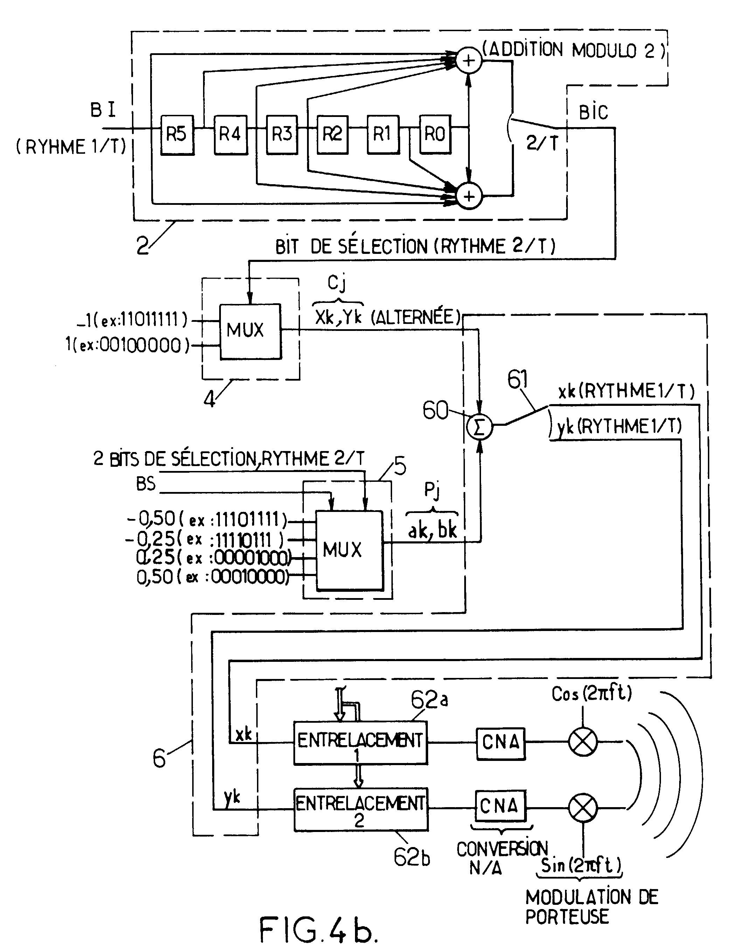

Une description plus détaillée d'un dispositif de codage respectivement d'un dispositif de décodage d'un signal numérique à transmettre, codé selon un codage hiérarchique conforme à l'objet de la présente invention, sera maintenant donnée en liaison avec les figures 4a et suivantes.

L'exemple de réalisation du dispositif de codage donné en relation avec la figure 4a concerne un dispositif susceptible d'être utilisé pour transmettre des signaux de télévision numérique à haute définition, par exemple.

Il permet de transmettre globalement 5 bits/s/Hz en débit utile.

Pour un taux d'erreur binaire de $10^{-4}$ le rapport signal à bruit requis en canal gaussien est de :

- 24 dB pour les bits supplémentaires, BS,
- 8 dB pour les bits indispensables, BI.

Ainsi qu'on le comprendra en liaison avec le procédé objet de la présente invention, lors du codage, les bits indispensables codés, BIC, à raison de 2 par symbole émis, sélectionnent le groupe courant auquel appartient le symbole émis, Si. Ainsi qu'on le comprendra à l'observation de la figure 3d par exemple, si b0 et b1 indiquent les valeurs de ces deux bits indispensables codés, la sélection du groupe est effectuée de la façon ci-après :

- b0 = 0 → 1/2 plan x > 0,
- b1 = 0 → 1/2 plan y > 0.

Pour des symboles Si repérés par 6 bits, le procédé objet de la présente invention permet alors de réserver 2 bits indispensables, BI, codés, et 4 bits supplémentaires, BS.

On rappelle que les bits supplémentaires peuvent être codés ou non dans une application donnée.

Ainsi que représenté en figure 4a, le dispositif de codage comprend : un circuit 1 de discrimination, dans le flux de bits constitutif du signal numérique, des bits indispensables, BI, et des bits supplémentaires, BS, constitutifs de chaque symbole. Le circuit 1 peut être constitué, par exemple, par des circuits de mémorisation écriture-lecture. Ces circuits délivrent de manière classique les bits indispensables, BI, respectivement les bits supplémentaires, BS, à partir d'un signal de synchronisation source.

En outre, ainsi qu'on l'a représenté en figure 4a, le dispositif de codage comprend, un circuit 2 de codage spécifique, de diversité D, des bits indispensables BI, ce circuit délivrant des bits indispensables codés, BIC.

Sur la figure 4a, on a également représenté un circuit 3 de codage, de diversité d, permettant, si nécessaire, d'effectuer un codage des bits supplémentaires. La représentation en traits mixtes de ce circuit indique que celui-ci n'est pas indispensable dans l'application considérée.

En outre, ainsi que représenté sur la figure précitée, le dispositif de codage comprend un circuit 4 de sélection du groupe courant, Gj, auquel appartiennent les bits indispensables codés, BIC, et un circuit 5 de sélection de la position Pj dans ce groupe courant des bits supplémentaires, BS. On comprend que les adresses d'identification de groupes, Cj, et de position, Pj, dans le groupe constituent les paramètres de modulation du signal numérique à transmettre.

Un mode de réalisation préférentiel des éléments essentiels du dispositif de codage représenté en figure 4a sera maintenant décrit en liaison avec la figure 4b et avec la figure 3d, précédemment décrites dans la description.

Sur la figure 4b, on a représenté en premier lieu le circuit de codage 2 comme constitué d'une pluralité de registres, notés R0 à R5, et de deux additionneurs, modulo 2. Ce circuit constitue en fait un circuit codeur disponible dans le commerce, ce circuit étant commercialisé en France par la société SOREP, sous la référence SOR 5033. Ce circuit est un codeur convolutif, de rendement 1/2 et de diversité D=10 dans cette application, de type classique. Il reçoit en entrée les bits indispensables, BI, au rythme 1/T, où T désigne la durée de chaque symbole, cette durée étant liée à la largeur de bande de l'onde porteuse modulée. Les deux additionneurs modulo 2 délivrent par l'intermédiaire d'un multiplexeur de sortie les bits indispensables codés, BIC, à la fréquence 2/T.

Ainsi qu'on l'a représenté sur la même figure 4b, le circuit 4 de sélection du centre Cj du groupe considéré est formé par un multiplexeur recevant en entrée de commande les bits indispensables codés, BIC, ce signal constituant un signal de sélection au rythme 2/T de deux entrées ayant une valeur déterminée -1 ou 1. Le multiplexeur constitutif du circuit 4 de sélection du centre Cj du groupe délivre en sortie alternativement les valeurs Xk et Yk, coordonnées ou adresses du centre Cj du groupe considéré, c'est-à-dire dans le cas de la figure 3d, les coordonnées des valeurs moyennes pondérées C00, C01, C10 ou C11.

Dans la figure 4b, on considère le mode de réalisation dans lequel le codage de diversité d n'est pas appliqué aux bits supplémentaires BS. Dans un tel cas, le circuit 5 de détermination de la position des bits dans le groupe courant précédemment détectés est formé par un multiplexeur, ainsi que représenté en figure 4b. Le multiplexeur comprend 4 entrées recevant des valeurs spécifiques -0,5, -0,25, +0,25 et +0,5, et est commandé par 2 bits de sélection au rythme de 2/T.

Si l'on note que les 4 bits supplémentaires, BS, utilisés dans le mode de réalisation considéré, tel que représenté en figure 3d, dans laquelle la position Pj des bits supplémentaires pour chaque groupe, et en particulier pour le groupe C00, est repérée par rapport aux coordonnées barycentriques représentant la valeur moyenne des valeurs possibles du groupe, on comprend que la position Pj est définie dans le groupe par rapport aux coordonnées barycentriques précitées représentées par les lignes en traits mixtes. Ainsi, la position Pj est donnée par les relations :

$$x = \text{Map}(b3,b2)$$

et

$$y = \text{Map}(b1,b0).$$

On note que Map désigne la représentation dans le plan des coordonnées barycentriques des positions Pj correspondantes pour les bits supplémentaires, BS, désignés par b3 à b0 précédemment mentionnés.

Dans ce cas, le multiplexeur 5 délivre les coordonnées $a_k$ respectivement $b_k$ de la position du symbole dans le référentiel barycentrique représenté en figure 3d.

Ainsi que représenté en figure 4b, le dispositif de constitution des symboles 6 comprend un sommateur d'entrée, noté 60, suivi d'un démultiplexeur 61 délivrant en parallèle au rythme 1/T, les coordonnées

$$xk = Xk + ak$$

$$yk = Yk + bk$$

du symbole courant Si à transmettre.

Ces coordonnées sont alors repérées par rapport non plus au référentiel barycentrique, représenté en figure 3d, mais, pour l'ensemble des groupes, par rapport au référentiel de base. Deux circuits mémoire respectifs, 62a, 62b, peuvent être prévus pour recevoir chacun les coordonnées xk, respectivement yk. On indique que les circuits de mémorisation, 62a, 62b, sont des circuits de type mémoire vive, lesquels permettent par exemple d'effectuer l'écriture-lecture des bits successifs des coordonnées xk, respectivement yk, de façon à effectuer un entrelacement approprié. On indique que le processus d'entrelacement permet de se prémunir contre les perturbations locales de canal, ces perturbations étant susceptibles d'affecter, en l'absence d'entrelacement, une série de symboles consécutifs, en l'absence de toute possibilité de reconstitution de ces symboles au décodage.

On note enfin que les circuits 62a, 62b d'entrelacement délivrent les signaux xk et yk prêts à la transmission à un circuit de transmission, lequel peut comporter, ainsi que représenté en figure 4b, des convertisseurs numériques-analogiques, notés CNA, et des circuits de modulation de porteuse(s) représentés sur la figure 4b.

Le dispositif de décodage d'un signal numérique codé par codage hiérarchique au moyen du dispositif de codage représenté en figures 4a et suivantes sera maintenant décrit en liaison avec les figures 5a à 5c.

Sur la figure 5a, on note que le dispositif de décodage comporte un circuit démodulateur 7 permettant de délivrer à partir du signal transmis une suite de symboles, correspondant aux symboles émis entachés de bruit, ce circuit de démodulation 7 étant suivi d'un circuit 8 de décodage par décisions douces. Le circuit de décodage par décisions douces est un circuit de type décodeur de Viterbi, ainsi que mentionné précédemment dans la description. Il permet de délivrer les bits indispensables décodés, notés 'BI sur la figure 5a. On rappelle que ces bits sont les bits correspondant aux adresses d'identification des groupes correspondants, et que le traitement réalisé par le décodeur 8 revient à effectuer un décodage sur une grille MDP4 associée au même code.

Sur la figure 5b, alors que sur la figure 5a le dispositif de décodage représenté peut être réservé à un récepteur de type bas de gamme, en l'absence de décodage des bits supplémentaires relatifs à l'information supplémentaire, on a au contraire représenté un dispositif de décodage plus sophistiqué permettant d'assurer le décodage des bits supplémentaires, BS.

Par rapport à la figure 5a, le circuit de décodage de la figure 5b comprend en outre un circuit 9 soustracteur recevant sur une première entrée chaque symbole courant délivré par le circuit démodulateur 7, et, sur une autre entrée de soustraction, la valeur moyenne pondérée du groupe de symboles, $\widehat{C_k}$, sur lequel le symbole transmis a été repéré. Un circuit 10 de correction optionnel permet d'assurer la correction de la puissance moyenne pour délivrer le symbole complémentaire corrigé, Sicc.

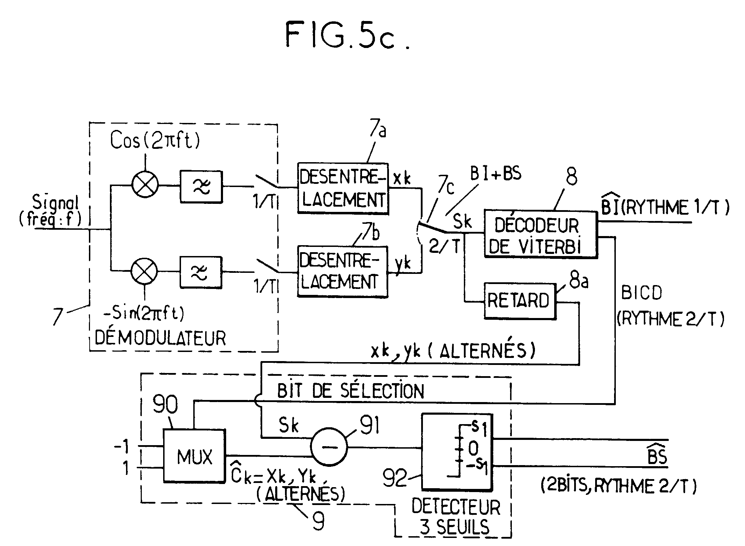

On note que lorsqu'un codage de diversité d est appliqué aux bits supplémentaires, BS, à l'émission, le dispositif décodeur peut alors comprendre en outre un circuit de décodage 11 correspondant. Dans les deux cas, on indique simplement que tant le circuit de codage 3 de la figure 4a que le circuit de décodage 11 de la figure 5b peuvent être réalisés au moyen d'un circuit semblable au circuit SOR 5033 précédemment mentionné dans la description. Dans l'exemple de réalisation qui sera donné en liaison avec la figure 5c, le décodeur 11 n'est pas nécessaire, puisqu'aucun codage n'est appliqué aux bits supplémentaires, BS, au niveau du codeur.

Sur la figure 5c, on reconnaît en 7 un circuit démodulateur de type classique, lequel ne sera pas décrit en détail. Des échantillonneurs de sortie au rythme 1/T délivrent les coordonnées du symbole bruité courant avant désentrelacement. Les circuits de désentrelacement 7a et 7b sont constitués par des circuits de type mémoire vive, lesquels permettent par accès en lecture, respectivement écriture, d'effectuer un désentrelacement correspondant au processus d'entrelacement déjà réalisé lors du codage. Chaque circuit de désentrelacement, 7a et 7b, délivre les coordonnées xk, respectivement yk, du symbole reçu courant, et un multiplexeur au rythme 2/T permet de délivrer les coordonnées du symbole courant, après désentrelacement, au décodeur 8 constitué par un décodeur de Viterbi. Ainsi, cela revient à assimiler la constellation de départ à une grille de type MDP4 formée par les barycentres des symboles possibles de chaque groupe Gj. On rappelle que ce décodeur peut être réalisé par le même circuit que le circuit codeur, SOR 5033 précédemment mentionné. Une ligne à retard, 8a, reçoit en entrée chaque symbole courant, Si, c'est-à-dire le symbole émis entaché de bruit et de distorsion, cette ligne à retard ayant un retard égal au temps de calcul du décodeur de Viterbi 8. Ce temps de retard est de l'ordre de 40 périodes en fonction de la profondeur de décodage. Le décodeur de Viterbi 8 délivre les bits indispensables estimés $\widehat{B_I}$ représentant l'information principale reçue après transmission et décodage, et leur version recodée BICD correspondant au barycentre du groupe considéré après décodage. Les bits indispensables recodés, BICD, sont délivrés par le décodeur de Viterbi 8, au rythme de 2/T au circuit 9 soustracteur. Ce circuit soustracteur 9 reçoit également les coordonnées xk, yk, du symbole Si retardé. Le circuit soustracteur 9 comprend un multiplexeur 90 recevant deux valeurs déterminées -1 et +1 sur ses entrées de données, et les bits indispensables recodés, BICD, sur son entrée de sélection. Le multiplexeur 90 délivre les coordonnées, Xk, Yk, alternées représentatives du barycentre du groupe $\widehat{C_k}$ correspondant à un circuit soustracteur proprement dit 91.

Le circuit soustracteur proprement dit 91 délivre un symbole représentatif des bits supplémentaires, BS, à un circuit détecteur à trois seuils, noté 92, dont les seuils -s1,0 et s1 correspondent, aux seuils -2δ,0 et 2δ représentés sur le référentiel barycentrique de la figure 3d. On comprend bien sûr que la valeur δ précitée et les seuils -s1,0 et s1 dépendent des valeurs entrées sur les quatre entrées de données du multiplexeur 5 de la figure 4b constituant le codeur. Le circuit détecteur à trois seuils permet de délivrer les bits supplémentaires, $\widehat{BS}$, estimés. La comparaison du signal délivré par le soustracteur élémentaire proprement dit 91 aux valeurs de seuil précitées permet de décider de la position, Pj, du symbole initialement émis rapport au référentiel barycentrique représenté en figure 3d.

Les circuits de correction de puissance moyenne 10 et de décodage ne seront pas décrits en détail, car ils sont optionnels et ne font pas partie du mode de réalisation représenté en figure 5c.

On a ainsi décrit un procédé et un dispositif de codage-décodage hiérarchique d'un signal numérique particulièrement performant dans la mesure où le codage hiérarchique permet un codage dans lequel il n'est pas nécessaire de contracter les groupes de points décrits précédemment pour obtenir une protection inégale efficace. Ce résultat est obtenu par l'application aux bits désignant les groupes de symboles possibles transmis, un code long, c'est-à-dire à grande diversité, associé à un décodeur à décisions douces.

On note en particulier que les bits supplémentaires supports de l'information supplémentaire peuvent être normalement transmis sans sacrifier leur taux de reconnaissance au décodage.

Le procédé et le dispositif de codage-décodage objets de la présente invention sont particulièrement bien adaptés à une transmission de signaux numériques de télévision haute définition, par exemple. Ils peuvent également être utilisés pour la transmission de signaux par satellite sur porteuse à 20 GHz. Dans ce cas, on note, en particulier, que le procédé et le dispositif de codage-décodage objets de la présente invention sont parfaitement adaptés à la transmission de l'information indispensable correspondant aux bits indispensables ainsi codés, quelles que soient les conditions de perturbations atmosphériques dégradant les conditions de propagation de l'onde porteuse à 20 GHz, seuls les bits supplémentaires pouvant, le cas échéant, être concernés et dégradés par l'apparition de telles perturbations.

## Revendications

1. Procédé de codage hiérarchique d'un signal numérique à transmettre, succession de symboles support d'une information, permettant un codage sous forme d'une suite numérique codée d'un premier type d'information principale et un codage d'un deuxième type d'information supplémentaire sous forme d'une autre suite numérique codée, l'information principale et supplémentaire étant constitutives de ladite information, procédé dans lequel pour une constellation de $2^n$ symboles possibles, cette constellation est arrangée en $2^{n-p}$ groupes de symboles contenant chacun $2^p$ symboles, à chaque groupe de symboles possibles étant associée une première valeur numérique comprise entre 0 et $2^{n-p}-1$ représentative de n-p bits de ladite information principale et à chaque symbole d'un groupe étant associée une autre valeur numérique comprise entre 0 et $2^p-1$ représentative de p bits de ladite information supplémentaire, caractérisé en ce que ledit procédé consiste :

    a) à choisir la configuration des groupes de façon que le nombre de symboles situés à la frontière entre deux groupes soit le plus petit possible, puis pour chaque symbole à transmettre ;
    b) à soumettre ladite information principale à un codage spécifique, de type codage long de diversité D, pour obtenir une suite de bits indispensables codés,
    c) à déterminer à partir de n-p bits subséquents de la suite de bits indispensables codés le groupe courant de la constellation de façon à associer aux n-p bits le groupe courant correspondant, et parallèlement ou suite aux étapes b) et c),
    d) à déterminer, à partir de p bits subséquents de l'autre suite numériques codée, la position du symbole à transmettre dans ce groupe courant, ce qui permet, grâce au choix de la configuration des groupes, de réduire la probabilité que D symboles se retrouvent tous à proximité de la limite entre deux groupes et de diminuer en conséquence le risque d'ambiguïté lors du décodage des bits indispensables transmis.

2. Procédé de codage selon la revendication 1, caractérisé en ce que celui-ci consiste en outre à soumettre lesdits groupes à une modulation en contraction ou dilatation, ce qui permet à partir d'une constellation non régulière d'ajuster le compromis robustesse du codage-décodage des bits relatifs à l'information principale/fragilité du codage-décodage ou repérage des bits relatifs à l'information supplémentaire.

3. Procédé de décodage d'un signal numérique transmis issu d'un codage hiérarchique selon la revendication 1 ou 2, caractérisé en ce que celui-ci consiste :

a) à soumettre ledit signal numérique transmis à un processus de démodulation pour obtenir les symboles reçus après transmission du signal numérique,

b) à soumettre une pluralité de ces symboles à un décodage par décisions douces pour restituer lesdits bits indispensables représentatifs de ladite information principale et les groupes associés correspondants, pour reconstituer au moins ladite information principale, l'information supplémentaire étant ignorée, le décodage à décisions douces permettant de se rapprocher d'un système de transmission simplifiée de la seule information principale, après codage de diversité D, repérée sur une constellation réduite présentant une distance intersymboles $\Delta$ supérieure à la distance intersymboles $\delta$ des groupes d'origine, le pouvoir de discrimination équivalent des bits indispensables décodés étant ainsi sensiblement augmenté.

4.  Procédé de décodage selon la revendication 3, caractérisé en ce que, afin d'utiliser ladite information supplémentaire, ce procédé consiste en outre suite aux étapes précédentes :

c) à effectuer, sur un symbole reçu une soustraction de la valeur moyenne pondérée du groupe courant, issu du décodage par décisions douces, pour délivrer un symbole complémentaire correspondant aux bits supplémentaires codés.

5.  Procédé de décodage selon la revendication 4, caractérisé en ce qu'il consiste en outre :

d) à effectuer sur le symbole complémentaire une étape de correction de la puissance moyenne du signal pour délivrer un symbole complémentaire corrigé.

6.  Procédé selon l'une des revendications 1 à 5, caractérisé en ce que le procédé de codage comporte en outre une étape de codage de l'information supplémentaire, ledit procédé de décodage comportant une étape de décodage correspondant, effectuée suite à l'étape c) de soustraction de la valeur moyenne pondérée ou d) consistant à effectuer la correction de puissance moyenne.

7.  Procédé selon la revendication 6, caractérisé en ce que celui-ci, tant au codage qu'au décodage, consiste à effectuer, au niveau des bits supplémentaires (BS) ) dans chaque sous-groupe, une itération du codage-décodage appliqué aux bits indispensables de façon à engendrer plus de deux niveaux de protection.

8.  Dispositif de codage hiérarchique d'un signal numérique à transmettre, succession de symboles support d'une information, ce dispositif permettant un codage sous forme d'une suite numérique codée d'un premier type d'information principale et un codage d'un deuxième type d'information supplémentaire, sous forme d'une autre suite numérique codée, l'information principale et supplémentaire étant constitutives de ladite information, codage dans lequel pour une constellation de $2^n$ symboles, cette constellation est arrangée en $2^{n-p}$ groupes de symboles contenant chacune $2^p$ symboles, à chaque groupe de symboles est associée une première valeur numérique comprise entre 0 et $2^{n-p}-1$ représentative de n-p bits de l'information principale et à chaque symbole d'un groupe est associée une autre valeur numérique comprise entre 0 et $2^p-1$ représentative de p bits de l'information supplémentaire, caractérisé en ce que la configuration des groupes étant choisie de façon que le nombre de symboles situés à la frontière entre deux groupes soit le plus petit possible, ledit dispositif comporte :

-   des moyens (1) de détermination, dans le flux de bits constitutifs du signal numérique, des bits indispensables et des bits supplémentaires correspondant à chaque symbole, ces moyens délivrant lesdits bits indispensables (BI) respectivement bits supplémentaires (BS),

-   des moyens (2) de codage spécifique, de diversité D, desdits bits indispensables délivrant des bits indispensables codés (BIC),

-   des moyens (4,5) de sélection, sur une constellation, du groupe courant (Gj) ) auquel correspondent les bits indispensables codés (BIC) et de la position (Pj) dans ce groupe courant du symbole correspondant aux bits supplémentaires (BS), les adresses d'identification de groupe et de position dans le groupe constituant les paramètres de modulation du signal numérique à transmettre.

9.  Dispositif de décodage d'un signal numérique codé par codage hiérarchique au moyen d'un dispositif de codage hiérarchique selon la revendication 8, caractérisé en ce que ledit dispositif de décodage comporte :

-   des moyens démodulateurs permettant de délivrer à partir du signal transmis une suite de bits support de symboles codés,

-   des moyens (8) de décodage par décisions douces permettant de délivrer les bits indispensables décodés ($\widehat{BI}$) et recodés (BICD), aux bits indispensables recodés étant associée la valeur de la moyenne pondérée du groupe de symboles sur lequel le symbole transmis a été repéré.

**10.** Dispositif de décodage selon la revendication 9, caractérisé en ce que afin d'assurer le décodage des bits supplémentaires, ledit dispositif de décodage comporte en outre :

- des moyens (9) soustracteurs recevant sur une première entrée chaque symbole courant délivré par lesdits moyens démodulateurs et sur une entrée de soustraction, la valeur moyenne pondérée du groupe de symboles sur lequel le symbole transmis a été repéré.

**11.** Dispositif de décodage selon la revendication 10, caractérisé en ce qu'il comprend en outre :

- un circuit (10) de correction de la puissance moyenne permettant de délivrer un symbole corrigé correspondant aux bits supplémentaires codés.

**12.** Dispositif de décodage selon la revendication 10 ou 11, caractérisé en ce que, en présence d'un codage de diversité d, d < D, des bits supplémentaires dans le dispositif de codage, ledit dispositif de décodage comprend un circuit décodeur (11) permettant de délivrer les bits supplémentaires décodés ($\widehat{BS}$).

**Patentansprüche**

**1.** Verfahren zur hierarchischen Codierung eines zu übertragenden Digitalsignals, einer Folge von eine Information tragenden Symbolen, welches eine Codierung einer ersten Art von Hauptinformation in die Form einer codierten Digitalfolge und eine Codierung einer zweiten Art von Zusatzinformation in die Form einer weiteren codierten Digitalfolge erlaubt, wobei die Haupt- und die Zusatzinformation die Information bilden, wobei bei dem Verfahren für eine Konstellation von $2^n$ möglichen Symbolen diese Konstellation in $2^{n-p}$ Gruppen von Symbolen angeordnet wird, die jeweils $2^p$ Symbole enthalten, wobei jeder Gruppe von möglichen Symbolen ein erster Digitalwert zwischen 0 und $2^{n-p}-1$ zugeordnet wird, der repräsentativ für n-p Bits der Hauptinformation ist, und jedem Symbol einer Gruppe ein weiterer Digitalwert zwischen 0 und $2^p-1$ zugeordnet wird, der repräsentativ für p Bits der Zusatzinformation ist, **dadurch gekennzeichnet**, daß das Verfahren darin besteht:

a) die Konfiguration der Gruppen derart zu wählen, daß die Anzahl von an der Grenze zwischen zwei Gruppen gelegenen Symbolen so klein wie möglich ist, dann für jedes zu übertragende Symbol;

b) die Hauptinformation einer spezifischen Codierung nach Art einer Langcodierung mit einer Diversität D zu unterziehen, um eine Folge von codierten unerläßlichen Bits zu erhalten,

c) aus den n-p aufeinanderfolgenden Bits der Folge von codierten unerläßlichen Bits die laufende Gruppe der Konstellation derart zu bestimmen, daß den n-p Bits die entsprechende laufende Gruppe zugeordnet wird, und parallel zu oder nach den Schritten b) und c),

d) aus den p aufeinanderfolgenden Bits der weiteren codierten Digitalfolge die Position des zu übertragenden Symbols in dieser laufenden Gruppe zu bestimmen, was es erlaubt, dank der Wahl der Konfiguration der Gruppen die Wahrscheinlichkeit zu reduzieren, daß D Symbole sich alle in der Nähe der Grenze zwischen zwei Gruppen befinden und folglich das Risiko einer Mehrdeutigkeit bei der Decodierung der übertragenen unerläßlichen Bits zu verringern.

**2.** Verfahren zur Codierung nach Anspruch 1, **dadurch gekennzeichnet**, daß es außerdem darin besteht, die Gruppen einer Kontraktions- oder Dilatationsmodulation zu unterziehen, was es erlaubt, ausgehend von einer nicht-regulären Konstellation den Kompromiß zwischen der Robustheit der Codierung/Decodierung der die Hauptinformation betreffenden Bits und der Störanfälligkeit der Codierung/Decodierung oder Bestimmung der die Zusatzinformation betreffenden Bits einzustellen.

**3.** Verfahren zur Decodierung eines übertragenen Digitalsignals, welches aus einer hierarchischen Codierung nach Anspruch 1 oder 2 hervorgegangen ist, **dadurch gekennzeichnet**, daß es darin besteht:

a) das übertragene Digitalsignal einem Demodulationsprozeß zu unterziehen, um die nach Übertragung des Digitalsignals empfangenen Symbole zu erhalten,

b) eine Mehrzahl dieser Symbole einer Decodierung durch weiche Entscheidungen zu unterziehen, um die unerläßlichen, für die Hauptinformation repräsentativen Bits und die entsprechenden zugeordneten Gruppen wiederherzustellen, um wenigstens die Hauptinformation wiederherzustellen, wobei die Zusatzinformation ignoriert wird, wobei die Decodierung mit weichen Entscheidungen es erlaubt, sich einem System zur vereinfachten Übertragung der alleinigen Hauptinformation nach Codierung mit einer Diversität D zu nähern, die auf einer reduzierten Konstellation aufgefunden wird, welche einen Intersymbolabstand $\Delta$ auf-

weist, der größer als der Intersymbolabstand δ der Ursprungsgruppen ist, wobei das äquivalente Diskriminierungsvermögen der decodierten unerläßlichen Bits somit merklich gesteigert ist.

4. Verfahren zur Decodierung nach Anspruch 3, **dadurch gekennzeichnet**, daß zur Verwendung der Zusatzinformation dieses Verfahren außerdem darin besteht, den vorausgegangenen Schritten nachfolgend:

c) an einem empfangen Symbol eine Subtraktion des gewichteten Mittelwerts der laufenden Gruppe durchzuführen, welche aus der Decodierung durch weiche Entscheidungen hervorgegangen ist, um ein ergänzendes Symbol zu liefern, welches den codierten zusätzlichen Bits entspricht.

5. Verfahren zur Decodierung nach Anspruch 4, **dadurch gekennzeichnet**, daß es außerdem darin besteht:

d) an dem ergänzenden Symbol einen Schritt zur Korrektur der mittleren Leistung des Signals durchzuführen, um ein korrigiertes ergänzendes Symbol zu liefern.

6. Verfahren nach einem der Ansprüche 1 bis 5, **dadurch gekennzeichnet**, daß das Verfahren zur Codierung außerdem einen Schritt zur Codierung der Zusatzinformation umfaßt, wobei das Verfahren zur Decodierung einen Schritt zur entsprechenden Decodierung umfaßt, der nach dem Schritt c) zur Subtraktion des gewichteten Mittelwerts oder dem Schritt d) durchgeführt wird, der aus dem Durchführen der Korrektur der mittleren Leistung besteht.

7. Verfahren nach Anspruch 6, **dadurch gekennzeichnet**, daß es sowohl bei der Codierung als auch bei der Decodierung darin besteht, im Bereich der zusätzlichen Bits (BS) in jeder Untergruppe eine Iteration der auf die unerläßlichen Bits angewandten Codierung/Decodierung durchzuführen, um mehr als zwei Niveaus von Schutz zu erzeugen.

8. Vorrichtung zur hierarchischen Codierung eines zu übertragenden Digitalsignals, einer Folge von eine Information tragenden Symbolen, wobei diese Vorrichtung eine Codierung einer ersten Art von Hauptinformation in die Form einer codierten Digitalfolge und eine Codierung einer zweiten Art von Zusatzinformation in die Form einer weiteren codierten Digitalfolge erlaubt, wobei die Haupt- und die Zusatzinformation die Information bilden, wobei bei der Codierung für eine Konstellation von $2^n$ Symbolen diese Konstellation in $2^{n-p}$ Gruppen von Symbolen angeordnet ist, welche jeweils $2^p$ Symbole enthalten, wobei jeder Gruppe von Symbolen ein erster Digitalwert zwischen 0 und $2^{n-p}-1$ zugeordnet ist, der repräsentativ für n-p Bits der Hauptinformation ist, und jedem Symbol einer Gruppe ein weiterer Digitalwert zwischen 0 und $2^p-1$ zugeordnet ist, der repräsentativ für p Bits der Zusatzinformation ist, **dadurch gekennzeichnet**, daß die Konfiguration der Gruppen derart gewählt ist, daß die Anzahl der an der Grenze zwischen zwei Gruppen gelegenen Symbole so klein wie möglich ist, wobei die Vorrichtung umfaßt:

- Mittel (1) ) zum Bestimmen der jedem Symbol entsprechenden unerläßlichen Bits und zusätzlichen Bits in dem das Digitalsignal bildenden Bitstrom, wobei diese Mittel die unerläßlichen Bits (BI) bzw. die zusätzlichen Bits (BS) liefern,

- Mittel (2) zur spezifischen Codierung der unerläßlichen Bits mit einer Diversität D, welche die codierten unerläßlichen Bits (BIC) liefern,

- Mittel (4, 5) zur Auswahl - auf einer Konstellation - der laufenden Gruppe (Gj), welcher die codierten unerläßlichen Bits (BIC) entsprechen, und der Position (Pj) des den zusätzlichen Bits (BS) entsprechenden Symbols in dieser laufenden Gruppe, wobei die Adressen zur Identifikation der Gruppe und der Position in der Gruppe die Parameter der Modulation des zu übertragenden Digitalsignals bilden.

9. Vorrichtung zur Decodierung eines Digitalsignals, welches durch hierarchische Codierung mittels einer Vorrichtung zur hierarchischen Codierung nach Anspruch 8 codiert ist, **dadurch gekennzeichnet**, daß die Vorrichtung zur Decodierung umfaßt:

- Demodulationsmittel, welche es erlauben, aus dem übertragenen Signal eine Folge von Bits zu liefern, welche codierte Symbole tragen,

- Mittel (8) zur Decodierung durch weiche Entscheidungen, welche es erlauben, die unerläßlichen decodierten ($\hat{bi}$) und erneut codierten (BICD) Bits zu liefern, wobei den erneut codierten unerläßlichen Bits der Wert des gewichteten Mittels der Gruppe von Symbolen zugeordnet ist, auf welcher das übertragene Symbol bestimmt wurde.

10. Vorrichtung zur Decodierung nach Anspruch 9, **dadurch gekennzeichnet**, daß zur Gewährleistung der Decodierung der zusätzlichen Bits die Vorrichtung zur Decodierung außerdem umfaßt:

- Subtraktionsmittel (9), welche an einem ersten Eingang jedes durch die Demodulationsmittel gelieferte, laufende Symbol empfangen, und an einem Subtraktionseingang den gewichteten Mittelwert der Gruppe von Symbolen empfangen, auf welcher das übertragene Symbol bestimmt wurde.

11. Vorrichtung zur Decodierung nach Anspruch 10, **dadurch gekennzeichnet**, daß sie außerdem umfaßt:

- eine Schaltung (10) zur Korrektur der mittleren Leistung, welche es erlaubt, ein korrigiertes, den codierten zusätzlichen Bits entsprechendes Symbol zu liefern.

12. Vorrichtung zur Decodierung nach Anspruch 10 oder 11, **dadurch gekennzeichnet**, daß bei Vorliegen einer Codierung der Diversität d, wobei d < D, der zusätzlichen Bits in der Vorrichtung zur Codierung, die Vorrichtung zur Decodierung eine Decodierschaltung (11) umfaßt, welche es erlaubt, die decodierten zusätzlichen Bits ($\hat{BS}$) zu liefern.

**Claims**

1. A method of hierarchical coding of a digital signal for transmission, i.e. a sequence of information-bearing symbols, in order to code a first kind of main information in the form of a coded digital series and code a second kind of additional information in the form of a second coded digital series, the main and the additional information making up the said information, in which process, in the case of a constellation of $2^n$ possible symbols, the constellation is arranged in $2^{n-p}$ groups of symbols each containing $2P$ symbols, each group of possible symbols being associated with a first digital value between 0 and $2^{n-p}-1$ representing n-p bits of the said main information and each symbol in a group being associated with another digital value between 0 and $2P-1$ representing p bits of the said additional information, characterised in that the said process consists in:

   a) choosing the configuration of the groups so that the number of symbols situated at the boundary between two groups is the smallest possible, then, in the case of each symbol for transmission;

   b) subjecting the said main information to specific coding, of diversity D long-coding type, to obtain a series of coded essential bits,

   c) starting from the subsequent n-p bits in the series of coded essential bits, determining the current group in the constellation so as to associate the n-p bits with the corresponding current group, in parallel with or after the steps b) and c), and

   d) starting from the subsequent p bits in the other coded digital series, determining the position of the symbol to be transmitted in the said current group, in order to reduce, by choice of the configuration of the groups, the probability that D symbols will all occur near the limit between two groups and thus reduce the risk of ambiguity when decoding the transmitted essential bits.

2. A method of coding according to claim 1, characterised in that it also consists in subjecting the said groups to modulation by contraction or expansion in order, starting from an irregular constellation, to adjust the compromise between ruggedness of coding and decoding the bits relating to the main information and fragility of coding and decoding or identification of the bits relating to the additional information.

3. A method of decoding a transmitted digital signal resulting from hierarchical coding according to claim 1 or 2, characterised in that the method consists in:

   a) subjecting the said transmitted digital signal to a process of demodulation in order to obtain the symbols received after transmission of the digital signal, and

   b) subjecting a plurality of the said symbols to decoding by gentle decisions in order to restore the said essential bits representing the said main information and the corresponding associated groups, in order to reconstitute at least the said main information, ignoring the additional information, decoding by gentle decisions giving approximately the same result as a system for simplified transmission of the main information only after diversity D coding, the main information being identified from a reduced constellation having an inter-symbol distance A greater than the inter-symbol distance 6 in the original groups, thus substantially increasing the equivalent power of discriminating the decoded essential bits.

4. A method of decoding according to claim 3, characterised in that in order to use the said additional information, the process also consists, after the preceding steps, in:
   c) subtracting the weighted average value of the current group from a received signal, the average value being obtained by decoding by gentle decisions, in order to deliver a complementary symbol corresponding to the coded additional bits.

**5.** A method of decoding according to claim 4, characterised in that it also consists in:
d) carrying out a step on the complementary symbol for correcting the average power of the signal in order to deliver a corrected complementary symbol.

**6.** A method according to any of claims 1 to 5, characterised in that the coding process also comprises a step for coding the additional information, the said decoding processing comprising a corresponding decoding step carried out after the step c) for subtracting the weighted average value or d) for correcting the average power.

**7.** A method according to claim 6, characterised in that the method, both in coding and in decoding, consists, at the level of the additional bits (BS) in each sub-group, in iteration of the coding and decoding applied to the essential bits so as to generate more than two levels of protection.

**8.** A device for hierarchical coding of a digital signal for transmission, i.e. a sequence of information-bearing symbols, the device being adapted to code a first kind of main information in the form of a coded digital series and to code a second kind of additional information in the form of a second coded digital series, the main and the additional information making up the said information, in which coding, in the case of a constellation of $2^n$ symbols, said constellation is arranged in $2^{n-p}$ groups of symbols each containing $2^p$ symbols, each group of symbols is associated with a first digital value between 0 and $2^{n-p}-1$ representing n-p bits of the main information and each symbol in a group is associated with another digital value between 0 and $2^p-1$ representing p bits of the additional information, characterised in that the configuration of the groups is chosen so that the number of symbols situated at the boundary between two groups is as small as possible, the device comprising:

- means (1) for determining the essential bits and the additional bits corresponding to each symbol in the flow of bits making up the digital signal, the means delivering the essential bits (BI) and the additional bits (BS) respectively,

- means (2) for specific diversity D coding of the essential bits so as to deliver coded essential bits (BIC), and

- means (4, 5) of selecting, out of a constellation, the current group (Gj) corresponding to the coded essential bits (BIC) and for selecting the position (Pj) of the symbol corresponding to the additional bits (BS) in the said current group, the addresses for identifying the group and the position in the group constituting the parameters for modulating the digital signal for transmission.

**9.** A device for decoding a coded digital signal by hierarchical coding by means of a hierarchical coding device according to claim 8, characterised in that the decoding device comprises:

- demodulating means for delivering a series of bits bearing coded symbols, obtained from the transmitted signal, and

- means (8) for decoding by gentle decisions so as to deliver the decoded ($\hat{BI}$) and the recoded (BICD) essential bits, the recoded essential bits being associated with the value of the weighted average of the group of signals in which the transmitted signal was identified.

**10.** A decoding device according to claim 9, characterised in that in order to decode the additional bits, the decoding device also comprises:

- subtracting means (9) having a first input for receiving each current symbol delivered by the said demodulating means and having a subtraction input for receiving the weighted average value of the group of symbols in which the transmitted symbol was identified.

**11.** A decoding device according to claim 10, characterised in that it also comprises:

- a circuit (10) for correcting the average power so as to deliver a corrected symbol corresponding to the coded additional bits.

**12.** A decoding device according to claim 10 or 11, characterised in that when the additional bits are coded with diversity d, d < D, in the coding device, the decoding device comprises a decoding circuit (11) for delivering the decoded additional bits ($\hat{BS}$).

FIG.1a.(ART ANTÉRIEUR)

FIG.1b.(ART ANTÉRIEUR)

FLUX DE BITS

FIG.2a.

FIG.2b.

FIG.2c.

17

SIGNAL NUMÉRIQUE TRANSMIS

FIG.3a.

| DÉMODULATION | — 2000 |

SYMBOLES Si BRUITÉS

| MÉMORISATION DE N SYMBOLES Si | — 2001a |

| DÉCODAGE DE N'SN SYMBOLES PAR DÉCISIONS DOUCES SUR Cj | — 2001b |

} 2001

$\hat{B}I$       BS

FIG.3b.

$C_{00}$     $C_{01}$

GROUPE 00                    GROUPE 01

$\delta$   $\Delta$

GROUPE 10                    GROUPE 11

$C_{10}$     $C_{11}$

FIG.3c.

FIG.3d.

FIG.3e.

FIG.3f.

EP 0 594 505 B1

FIG.4a.

FIG.5b.

FIG.5a.

FIG.4b.

# FIG.5c.